# EUROPEAN PATENT APPLICATION

(11) **EP 2 265 002 A1**
(43) Date of publication of application: **22.12.2010**
(21) Application number: 10162327.0
(22) Date of filing: 07.05.2010
(51) Int. Cl.: H04N 5/44, H04N 5/445

(54) **Display apparatus and method for providing broadcast program information**

(30) Priority: 16.06.2009 KR 20090053633
(71) Applicant: SAMSUNG ELECTRONICS CO., LTD., Suwon-si Gyeonggi-do 442-742 (KR)
(72) Inventor: Park, Jong-wook, Seoul (KR)
(74) Representative: Davies, Robert Ean

(57) **Abstract**

A display apparatus and method for providing broadcast program information are provided. The display apparatus includes a communication unit which receives electronic program guide (EPG) information, a display panel which displays a current program being broadcast in full screen, and a control unit which if display of an EPG detailed information screen is requested while the current program finishes and a next program is being displayed in full screen, displays an updated EPG detailed information screen showing detailed information of the next program based on the received EPG information.

## Description

### CROSS-REFERENCE TO RELATED APPLICATIONS

This application claims priority from Korean Patent Application No. 10-2009-0053633, filed on June 16, 2009 in the Korean Intellectual Property Office, the disclosure of which is incorporated herein by reference in its entirety.

### BACKGROUND OF THE INVENTION

### 1. Field of the Invention

Apparatuses and methods consistent with the present invention relate to a display apparatus and method for providing broadcast program information, and more particularly, to a display apparatus and method for providing broadcast program information including an electronic program guide (EPG) in which a displayed program corresponds to detailed information.

### 2. Description of the Related Art

An electronic program guide (EPG) provides a table of scheduled broadcast programs based on diverse information such as channel, title, time, genre, and detailed information of broadcast programs. A viewer searches for, views, records, or schedules a desired program using the EPG information.

If a user selects a program on an on-screen initial EPG screen, a first EPG screen is displayed, showing the selected program in an area and detailed information of the selected program in the remaining area. If the selected program finishes and a new program subsequently following the selected program starts, a second EPG screen is displayed, showing the new program in an area. However, the detailed information of the previous program is still displayed in the remaining area of the second EPG screen, and thus does not correspond to the new program.

Alternatively, while the user is viewing a program on full screen by enlarging the program on the first EPG screen, if the program finishes, a new program subsequently following the program is displayed. While the new program is displayed, if the user returns to the first EPG screen, the new program is displayed in an area of the first EPG screen, but detailed information of the previous program is still displayed in the remaining area of the first EPG screen without being updated to detailed information of the new program.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a display apparatus and method for providing broadcast program information so that in an EPG screen, a program can correspond to detailed information.

According to an exemplary aspect of the present invention, there is provided a display apparatus providing broadcast program information, the display apparatus including a communication unit which receives electronic program guide (EPG) information, a display panel which displays a current program being broadcast in full screen, and a control unit which if display of an EPG detailed information screen is requested while the current program finishes and a next program is being displayed in full screen, displays an updated EPG detailed information screen showing detailed information of the next program based on the received EPG information.

The display apparatus may further include a storage unit which stores the received EPG information, wherein the control unit may extract the detailed information of the next program from the stored EPG information and display the detailed information of the next program together with the next program on the updated EPG detailed information screen.

The display apparatus may further include a storage unit which stores the received EPG information, wherein if the current program finishes, the control unit may extract the detailed information of the next program from the stored EPG information and temporarily generate the updated EPG detailed information screen, and if display of the EPG detailed information screen is requested, the control unit may display the temporarily generated updated EPG detailed information screen on the display panel.

If the control unit determines that a program being reproduced switches from the current program to the next program by monitoring the stored EPG information, the control unit may temporarily generate the updated EPG detailed information screen.

If the current program finishes while the EPG detailed information screen showing the current program and the detailed information of the current program is being displayed on the display panel, the control unit may display the updated EPG detailed information screen showing the next program and the detailed information of the next program.

The display apparatus may further include a storage unit which stores the received EPG information, wherein if the control unit determines that the current program finishes by monitoring the stored EPG information, the control unit may extract the detailed information of the next program from the stored EPG information, and display the updated EPG detailed information screen showing the detailed information of the next program together with the next program.

The display panel may display an initial EPG screen including a list of programs according to a plurality of broadcast channels based on the received EPG information, and if one of the broadcast channels is selected on the initial EPG screen, the control unit may display a program being currently broadcast through the selected channel on the initial EPG screen in full screen.

The display panel may display an initial EPG screen including a list of programs according to a plurality of broadcast channels based on the received EPG information, and if one program of the list of programs is selected on the initial EPG screen, the control unit may display an EPG detailed information screen showing the selected program and detailed information of the selected program.

The display panel may be a touch screen which receives a user command and displays an EPG screen according to the user command.

According to another exemplary aspect of the present invention, there is provided a method for providing broadcast program information in a display apparatus, the method including receiving electronic program guide (EPG) information, displaying a current program being broadcast in full screen, and if display of an EPG detailed information screen is requested while the current program finishes and a next program is being displayed in full screen, displaying an updated EPG detailed information screen showing detailed information of the next program based on the received EPG information.

The method may further include storing the received EPG information, wherein the displaying of the updated EPG detailed information screen may include extracting the detailed information of the next program from the stored EPG information, and generating and displaying the updated EPG detailed information screen showing the detailed information of the next program together with the next program.

The method may further include storing the received EPG information, and if the current program finishes, extracting the detailed information of the next program from the stored EPG information and temporarily generating the updated EPG detailed information screen, wherein the displaying of the updated EPG detailed information screen may include displaying the temporarily generated updated EPG detailed information screen if display of the EPG detailed information screen is requested.

The method may further include determining whether or not a program being reproduced switches from the current program to the next program by monitoring the stored EPG information, wherein if the program being reproduced switches from the current program to the next program, the updated EPG detailed information screen may be temporarily generated.

The method may further include displaying the EPG detailed information screen showing the current program and the detailed information of the current program, and if the current program finishes, displaying the updated EPG detailed information screen showing the next program and the detailed information of the next program.

The method may further include storing the received EPG information, determining whether or not the current program finishes by monitoring the stored EPG information, if the current program finishes, extracting the detailed information of the next program from the stored EPG information and displaying the updated EPG detailed information screen showing the detailed information of the next program together with the next program.

The method may further include displaying an initial EPG screen including a list of programs according to a plurality of broadcast channels based on the received EPG information, selecting one of the broadcast channels on the initial EPG screen, and displaying a program being currently broadcast through the selected channel on the initial EPG screen in full screen.

The method may further include displaying an initial EPG screen including a list of programs according to a plurality of broadcast channels based on the received EPG information, selecting one program of the list of programs on the initial EPG screen, and displaying the updated EPG detailed information screen showing the selected program and detailed information of the selected program.

According to another exemplary aspect of the present invention, there is provided a display apparatus providing broadcast program information, the display apparatus including a communication unit which receives electronic program guide (EPG) information, a display panel which displays an EPG detailed information screen showing a current program being broadcast and detailed information of the current program based on the received EPG information, and a control unit which if the current program finishes and a next program is reproduced, displays an updated EPG detailed information screen showing detailed information of the next program.

According to another exemplary aspect of the present invention, there is provided a method for providing broadcast program information in a display apparatus, the method including receiving electronic program guide (EPG) information, displaying an EPG detailed information screen showing a current program being broadcast and detailed information of the current program based on the received EPG information, and if the current program finishes and a next program is reproduced, displaying an updated EPG detailed information screen showing detailed information of the next program.

According to yet another exemplary aspect of the present invention, there is an image system including: a first display apparatus; and a second display apparatus, wherein the first display apparatus includes: a communication unit which receives electronic program guide (EPG) information; a first display panel which displays a current program being broadcast; a first control unit which, if display of an EPG detailed information screen is requested while the current program finishes and a next program is being displayed in fully screen, displays an updated EPG detailed information screen showing detailed information of the next program based on the received EPG information, and which transmits a control command to the second display apparatus; and wherein the second display apparatus includes: a tuner unit which tunes to a broadcast channel according to the control command; a second display panel; a second control unit which performs data communication with the first display apparatus.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a diagram of an image system according to an exemplary embodiment of the present invention;
FIG. 2 is a schematic block diagram of a display apparatus illustrated in FIG. 1;
FIG. 3 illustrates an example of an initial EPG screen displaying a list of broadcast programs;
FIG. 4 illustrates an example of displaying a broadcast program on full screen;
FIG. 5A illustrates an example of an EPG detailed information screen including detailed information of a program;
FIG. 5B illustrates an example of an EPG detailed information including a program and detailed information of the program;
FIGS. 6A and 6B illustrate an example of a current program and a next program in full screen;
FIG. 7 illustrates an updated EPG detailed information screen displaying a next program and detailed information of the next program;
FIG. 8 is a block diagram of a broadcast display apparatus illustrated in FIG. 1; and
FIGS. 9 to 12 are flow charts illustrating a method for controlling a display apparatus according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

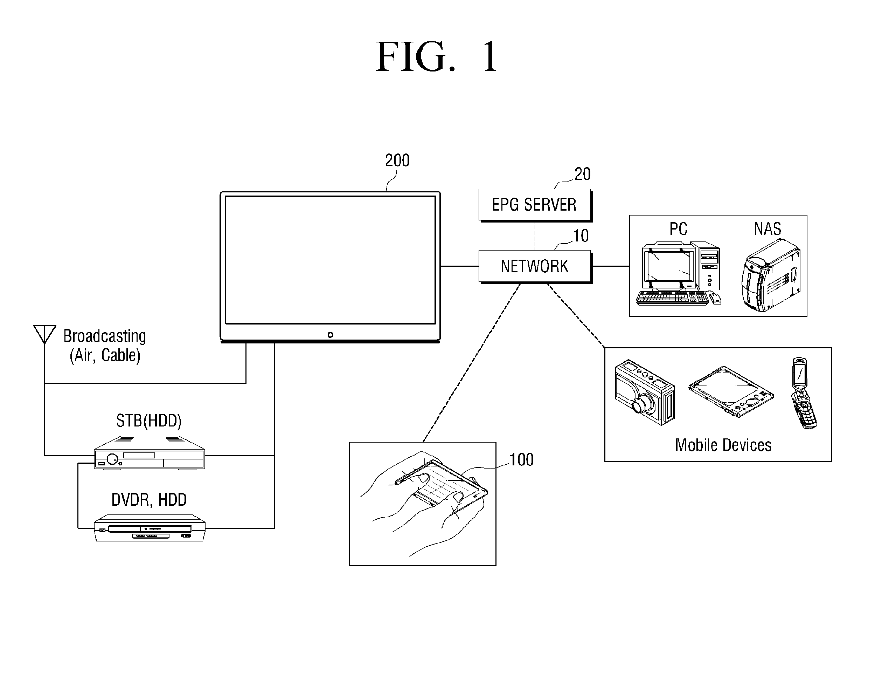

FIG. 1 is a diagram of an image system according to an exemplary embodiment of the present invention. Referring to FIG. 1, the image system includes a display apparatus 100, a broadcast display apparatus 200, and peripherals.

The display apparatus 100 which provides broadcast program information remotely controls the broadcast display apparatus 200 through a network 10 or infrared (IR) communication, displays real-time broadcast received through the broadcast display apparatus 200, and receives and displays broadcast program information from an electronic program guide (EPG) server 20 or the broadcast display apparatus 200. The broadcast program information includes EPG information.

In addition, the display apparatus 100 displays external images input through the peripherals which are connected to the broadcast display apparatus 200, and controls the peripherals through a peripheral control menu displayed on the display apparatus 100. In this case, the display apparatus 100 can be used together with the broadcast display apparatus 200 as a dual television. For example, the broadcast display apparatus 200 may display a broadcast provided by a set-top box which is connected to the broadcast display apparatus 200, and the display apparatus 100 may display images provided by a Digital Versatile Disc (DVD) through the network 10.

EPG information varies according to a region or a type of broadcast (for example, terrestrial wave, cable, communication satellite (CS), or broadcasting satellite (BS)).

The broadcast display apparatus 200 is a device for receiving and outputting a broadcast signal through a tuner, for example, a television, and is remotely controlled by the display apparatus 100. The broadcast display apparatus 200 transmits EPG information and a program, which are received through the tuner, to the display apparatus 100. The broadcast display apparatus 200 may be communicably connected to a plurality of display apparatuses 100. In this case, the user can view different broadcasts, which the broadcast display apparatus 200 receives through a plurality of tuners, using the plurality of display apparatuses 100.

The network 10 may be implemented with wireless communication technology such as WiFi, IEEE 802.11 wireless LAN (WLAN), home radio frequency (RF), Bluetooth, high rate wireless personal area network (HR WPAN), ultra-wideband (UWB), low rate wireless personal area network (LR WPAN), or IEEE 1394. The network 10 accesses the EPG server 20 or provides data transmission paths between devices.

The network 10 is connected to the display apparatus 100, the broadcast display apparatus 200, and the peripherals so as to communicate with each other wirelessly or using wire. The peripherals may be devices such as set-top boxes (STBs), Blu-ray Disc players (BDPs), Digital Versatile Disc Players (DVDPs), videocassette recorders (VCRs), personal computers (PCs), or network-attached storages (NASs), or mobile devices such as mobile phones, camcorders, portable media players (PMPs), or digital cameras.

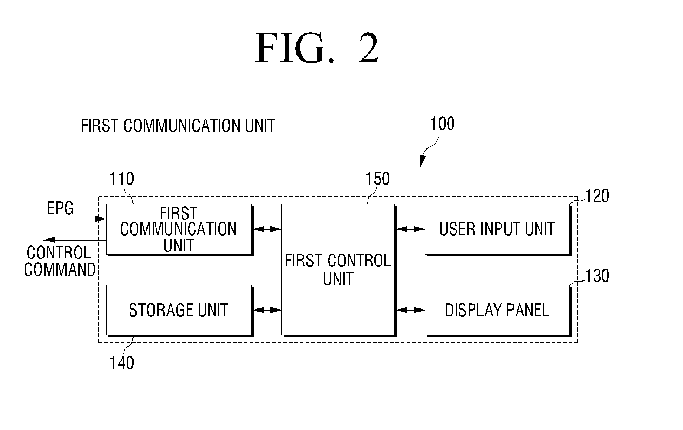

FIG. 2 is a schematic block diagram of the display apparatus 100 illustrated in FIG. 1. Referring to FIG. 2, the display apparatus 100 includes a first communication unit 110, a user input unit 120, a display panel 130, a storage unit 140, and a first control unit 150.

The first communication unit 110 transmits a command to remotely control the broadcast display apparatus 200 to the broadcast display apparatus 200, and receives a broadcast signal of a selected channel from the broadcast display apparatus 200. In particular, the first communication unit 110 receives EPG information, content, or data from the EPG server 20 or the broadcast display apparatus 200 over the Internet through the network 10, or receives EPG information, content, or data directly from the broadcast display apparatus 200 according to a preset communication standard without the network 10. In addition, the first communication unit 110 receives a plurality of displayable signals from the peripherals. Hereinafter, it is described as an example that the first communication unit 110 receives the EPG information from the EPG server 20 and displays the EPG information.

The first communication unit 110 may be implemented with at least one wireless communication module. For example, the first communication unit 110 may be implemented with a module which is accessible to the EPG server 20, such as WiFi or IEEE 802.11 WLAN, and a module which supports local area communication between devices, such as IR communication, ZigBee, or Bluetooth.

The user input unit 120 may include a plurality of buttons to input a user command. For example, the user may control turn-on or turn-off, channel change, or volume of the broadcast display apparatus 200 by pressing a number button. The user input unit 120 may include only a button for turning on or off the broadcast display apparatus 200.

Alternatively, the user input unit 120 may be implemented as a touch screen capable of inputting a user command. In this case, buttons are displayed on the touch panel.

The display panel 130 displays a broadcast signal, EPG information, and data which are received from the broadcast display apparatus 200, EPG information which is received from the EPG server 20 through the network 10, or an audio and video signal which are received from the peripherals. Accordingly, the display apparatus 100 and the broadcast display apparatus 200 can operate as a dual TV.

The display panel 130 may be implemented with a touch screen, a cathode ray tube (CRT), a liquid crystal display (LCD), a thin film transistor liquid crystal display (TFT-LCD), a plasma display panel (PDP), a flexible display, a head-mounted display (HMD) or the like. If the display panel 130 is not a touch screen, the display panel 130 shows a cursor, so the user can move the cursor using the user input unit 120 to request a desired operation.

Hereinafter, it is described that the display panel 130 is implemented with a touch screen. The display panel 130 provides diverse menus which can be used in the display apparatus 100, and outputs a touch signal generated by the user's touch to the first control unit 150. Since the operating principle of the touch screen is well known, detailed description is omitted here.

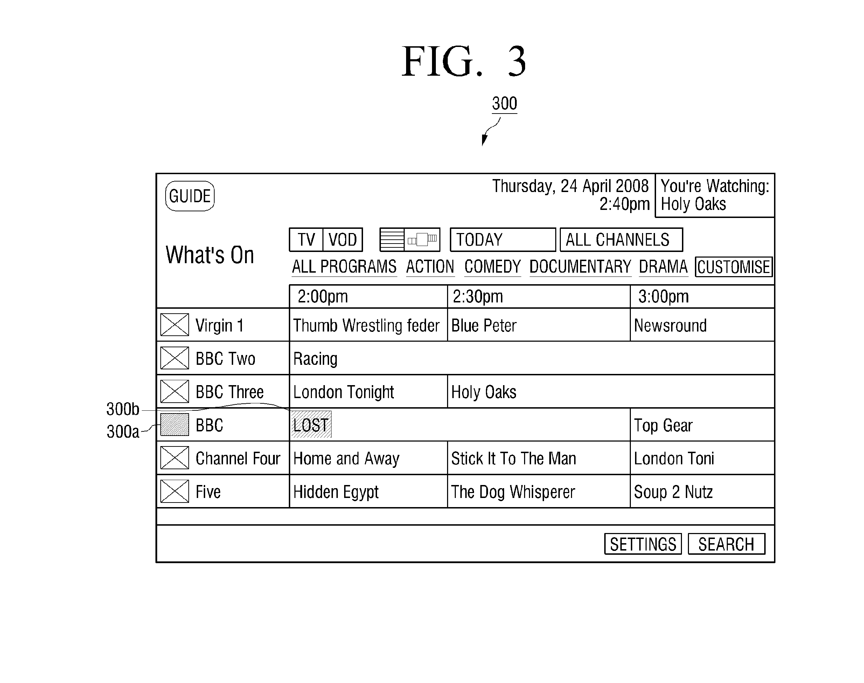

The display panel 130 displays diverse EPG screens based on the EPG information received through the first communication unit 110. For example, the display panel 130 displays an initial EPG screen 300 showing a list of broadcast programs according to broadcast channels and times, as illustrated in FIG. 3. The structure of the initial EPG screen 300 varies according to a region or a type of broadcast (for example, terrestrial wave, cable, satellite). Description of the EPG screen is given below with reference to FIGS. 3 to 7.

The storage unit 140 stores diverse control programs needed to operate the display apparatus 100, an operating program, and EPG information received from the EPG server 20 or the broadcast display apparatus 200, and temporarily stores an EPG detailed information screen which is temporarily generated by the first control unit 150. The storage unit 140 may include a plurality of physical storage media, or may be a single physical storage medium which is divided into a plurality of areas. The storage unit 140 may be implemented with a ROM, a flash ROM, a hard disk drive (HDD) or the like.

The first control unit 150 controls the overall operation of the display apparatus 100, and controls the broadcast display apparatus 200 to operate as the user operates the user input unit 120 or the display panel 130. That is, the first control unit 150 generates a control command corresponding to the user's manipulation, and transmits the control command to the broadcast display apparatus 200 through the first communication unit 110. The control command may include a command to turn on the broadcast display apparatus 200, a command to transmit EPG information, a command to select a broadcast program, a recording command, a preview command, and so on.

In addition, the first control unit 150 provides an Internet function using the network 10, controls the first communication unit 110 to request the EPG server 20 or the broadcast display apparatus 200 to transmit EPG information, and controls the storage unit 140 to store received EPG information. If the user requests display of an initial EPG screen using the user input unit 120 or the display panel 130, the first control unit 150 generates and displays an initial EPG screen 300 showing a list of broadcast programs according to broadcast channels on the display panel 130 as illustrated in FIG. 3.

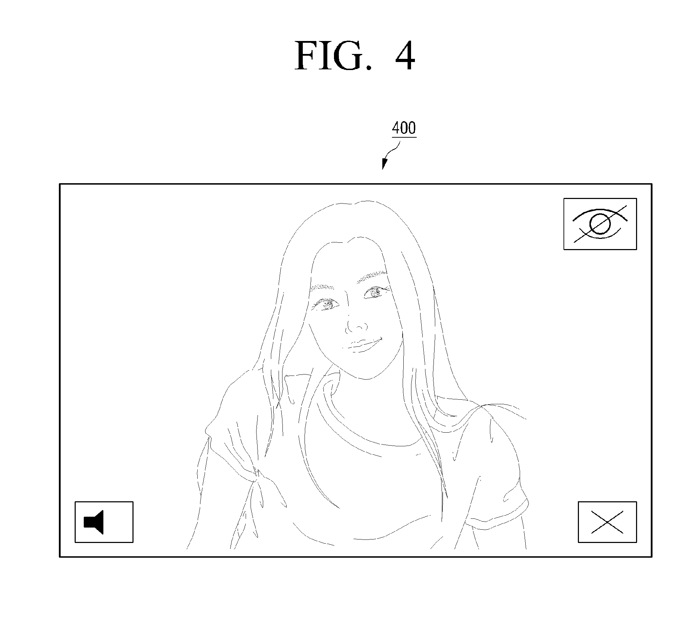

If the user selects one of the broadcast channels displayed on the initial EPG screen 300, the first control unit 150 displays a current broadcast program of the selected channel on the initial EPG screen 300 in full screen. For example, if the user selects broadcast channel BBC 300a from the initial EPG screen 300, the first control unit 150 displays a current broadcast program of BBC 300a on the EPG screen 300 in full screen 400 as illustrated in FIG. 4. The size of the full screen 400 in FIG. 4 is the same as that of the initial EPG screen 300. The current broadcast program is displayed on the full screen 400.

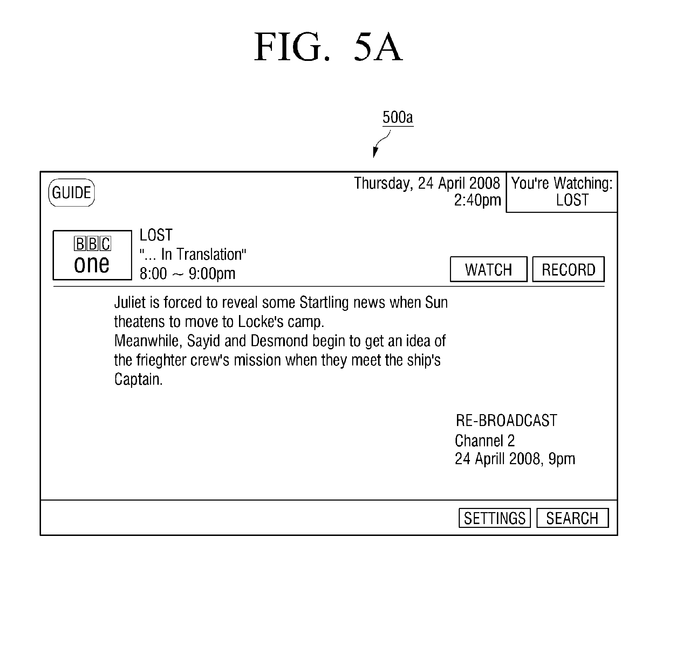

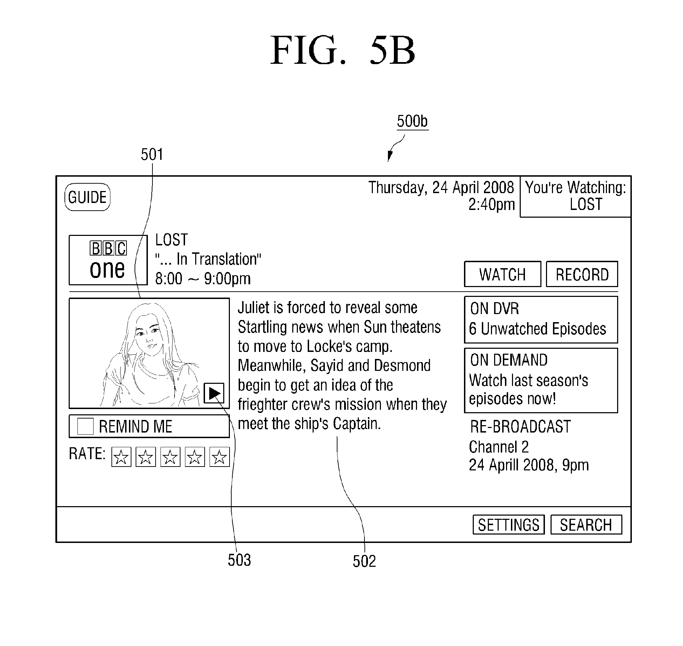

In addition, if the user selects a program from the list of broadcast programs displayed on the initial EPG screen 300, the first control unit 150 displays an EPG detailed information screen including detailed information of the selected program on the display panel 130. For example, if the user selects LOST 300b on the initial EPG screen 300, the display panel 130 generates and displays an EPG detailed information screen 500a including detailed information of selected LOST 300b on the display panel 130, as illustrated in FIG. 5B.

Referring to FIG. 5B, an EPG detailed information screen 500b is divided into a first area 501 for displaying a current broadcast program, and a second area 502 for displaying detailed description of the current broadcast program. The first area 501 may display a thumbnail image of the current broadcast program or may reproduce the current broadcast program. The detailed description of the current broadcast program displayed on the second are 502 is information regarding the current broadcast program such as story, a next broadcast time, or the like, which is included in the EPG information stored in the storage unit 140.

Hereinafter, it is described that a current broadcast program is reproduced on the first area 501 of the EPG detailed information screen 500b. Accordingly, the first control unit 150 requests the broadcast display apparatus 200 to transmit content of the current broadcast program, receives the content from the broadcast display apparatus 200, displays the received content on the first area 501, extracts detailed information of the current broadcast program from EPG information stored in the storage unit 140, and displays the detailed information on the second area 502.

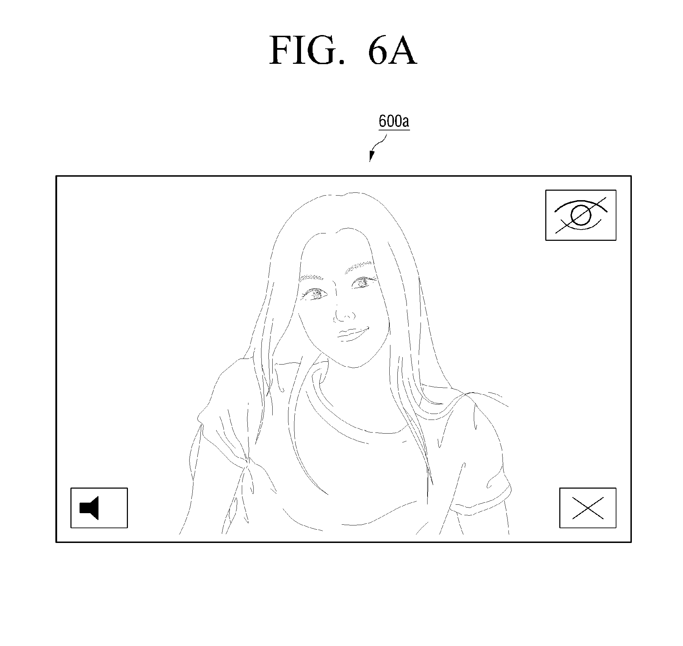

If the user requests the current broadcast program being reproduced on the EPG detailed information screen 500b to be displayed in full screen, the first control unit 150 displays the current broadcast program in full screen as illustrated in FIG. 6A. Accordingly, the user can view the current broadcast program in the size of the display panel 130. For example, the user can request display of the current broadcast program in full screen by touching an enlarge button 503 displayed on the first area 501.

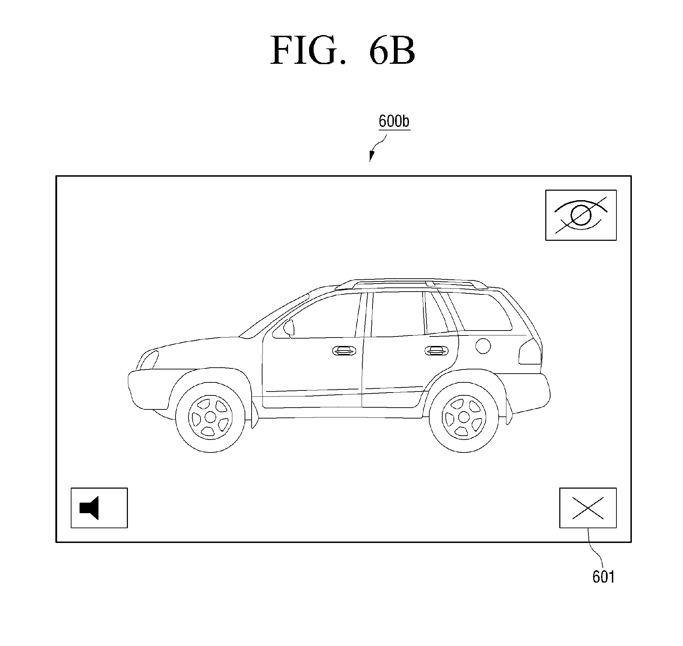

If the current broadcast program being reproduced on the full screen 600a of FIG. 6A finishes, the first control unit 150 displays a full screen 600b reproducing a next program as illustrated in FIG. 6B. The next program is a program subsequently following the current broadcast program in the same channel. In addition, if the current broadcast program is a program which the broadcast display apparatus 200 receives through a tuner, or a program received directly from the broadcast display apparatus 200 through the network 10 or without the network 10, the next program is received in the same manner.

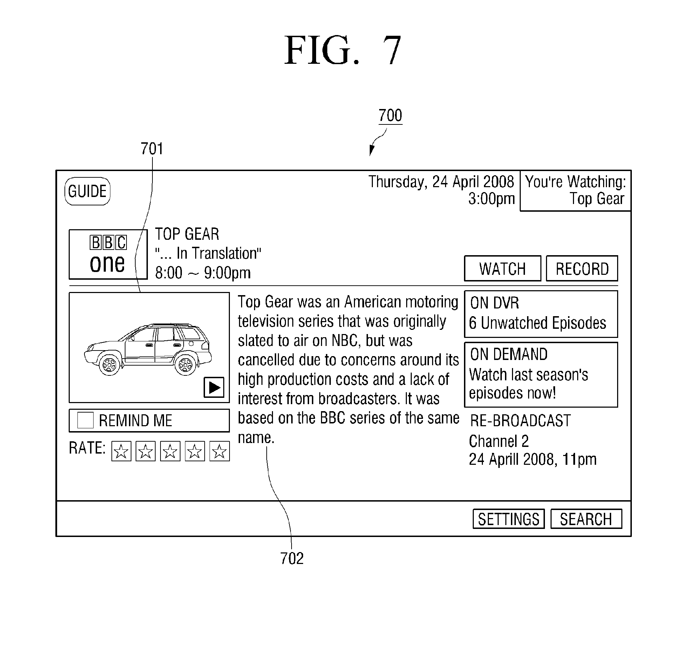

If a request for switching to the EPG detailed information screen is received while the next program is being reproduced in full screen, the first control unit 150 generates an updated EPG detailed information screen 700 including the next program being reproduced and detailed information of the next program based on EPG information received through the first communication unit 110 as illustrated in FIG. 7, and displays the updated EPG detailed information screen 700 on the display panel 130. Switching to the EPG detailed information screen can be requested by touching a button 601 provided on the full screen 600b.

If the request for switching to the EPG detailed information screen is received, the first control unit 150 extracts detailed information of the next program being reproduced from the EPG information stored in the storage unit 140, displays the extracted detailed information on a second area 702 of a full screen 700, and reproduces the next program on a first area 701.

In greater detail, if it is determined that a current program being reproduced on the full screen 600a finishes or that the current program finishes and a next program is being reproduced, the first control unit 150 extracts detailed information of the next program from stored EPG information.

The first control unit 150 temporarily generates the EPG detailed information screen 700 using the extracted detailed information and content of the next program being received as illustrated in FIG. 7, and temporarily stores the EPG detailed information screen 700 in the storage unit 140 or a buffer (not shown). If the user requests display of the EPG detailed information screen 700 using the button 601, the first control unit 150 displays the temporarily generated EPG detailed information screen 700 on the display panel 130 as illustrated in FIG. 7.

The first control unit 150 determines whether or not a program being reproduced switches from the current program to the next program by periodically monitoring the EPG information stored in the storage unit 140, and temporarily generates an updated EPG detailed information screen if a program being reproduced switches from the current program to the next program. That is, the first control unit 150 checks a point of time when the current program finishes or a point of time when the next program starts based on the EPG information, and temporarily generates an updated EPG detailed information screen at the checked point of time.

Alternatively, when a request for switching to the EPG detailed information screen is received while the next program is being reproduced in the full screen 600b, if detailed information of the next program is not stored in the storage unit 140, the first control unit 150 controls the first communication unit 110 to request and receive the detailed information of the next program from the EPG server 20, and generates an updated EPG detailed information screen 700 using the detailed information of the next program. This method may be applied to other exemplary embodiments.

If the current program being reproduced finishes while an EPG detailed information screen 500b as illustrated in FIG. 5B is being displayed on the display panel 130, the first control unit 150 extracts detailed information of the next program from EPG information stored in the storage unit 140. The first control unit 150 generates an updated EPG detailed information screen 700 as illustrated in FIG. 7 using the extracted detailed information and content of the next program, and displays the updated EPG detailed information screen 700 on the display panel 130. The first control unit 150 determines whether or not a program being reproduced switches from the current program to the next program by periodically monitoring the EPG information stored in the storage unit 140 as described above.

The first control unit 150 switches a mode of the display apparatus 100 to a set background mode according to the user's request. The background mode includes an electronic picture frame mode for displaying media content stored in the storage unit 140 or the peripherals, a scheduled view notification mode for notifying the user of a scheduled program, a screen saver mode, a widget mode, and the like.

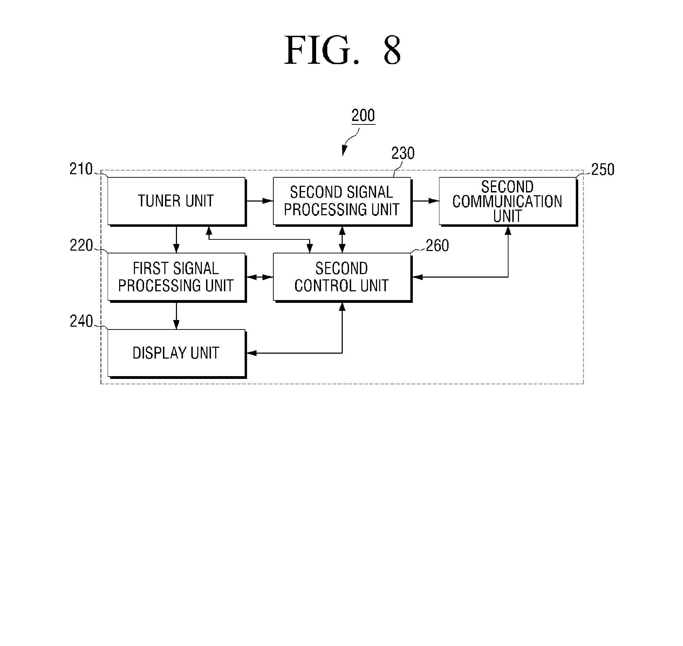

FIG. 8 is a block diagram of the broadcast display apparatus 200 illustrated in FIG. 1. Referring to FIG. 8, the broadcast display apparatus 200 includes a tuner unit 210, a first signal processing unit 220, a second signal processing unit 230, a display unit 240, a second communication unit 250, and a second control unit 260.

The tuner unit 210 tunes to a broadcast channel according to a control signal of the second control unit 260. The tuner unit 210 may have a plurality of tuners. For example, one tuner tunes to a broadcast channel to be displayed on the display apparatus 100, and another tuner tunes to a broadcast channel to be displayed on the broadcast display apparatus 200. In addition, programs of channels tuned by the plurality of tuners can be concurrently displayed on the display apparatus 100 or the broadcast display apparatus 200.

If a channel tuned by the tuner unit 210 is a channel to be displayed on the broadcast display apparatus 200, the first signal processing unit 220 converts a signal received through the channel into a signal of a displayable format.

If a channel tuned by the tuner unit 210 is tuned according to a request of the display apparatus 100, the second signal processing unit 230 converts a signal received through the channel into a signal of a format capable of being processed by the display panel 130 of the display apparatus 100. For example, the second signal processing unit 230 can perform transcoding of a broadcast signal, or performs translating by varying a transmission rate of a broadcast signal. For example, the signal converting unit 260 can adaptively perform transcoding in consideration of the performance of the display apparatus 100 by performing bit rate conversion, frame rate conversion, or resolution conversion. Accordingly, the display apparatus 100 displays a broadcast signal without separate signal change.

The converted signal may be transmitted to the first communication unit 110 through the second communication unit 250 and the network 10, or may be transmitted from the second communication unit 250 directly to the first communication unit 110.

The display unit 240 displays a broadcast signal of a channel tuned by the tuner unit 210, and an image signal input from the peripherals which is communicably connected to the broadcast display apparatus 200. The display unit 240 may be implemented with a CRT, a LCD, a TFT-LCD, a PDP, a HMD, a flexible display, or the like.

The second communication unit 250 functions as an interface to perform data communication with the display apparatus 100 or the peripherals.

The second control unit 260 controls the overall operation of the broadcast display apparatus 200, and in particular, controls the broadcast display apparatus 200 according to a control command of the display apparatus 100. The control command may include diverse commands to operate the broadcast display apparatus 200, such as channel tuning, recording, preview, volume adjustment, turning on or off, and the like.

The second control unit 260 controls the tuner unit 210 to tune to a broadcast channel according to a control command of the display apparatus 100, controls the second communication unit 250 to transmit a broadcast signal of the tuned channel, and controls the second communication unit 250 to transmit EPG information pre-stored in a memory (not shown) to the display apparatus 100 according to a request for EPG transmission.

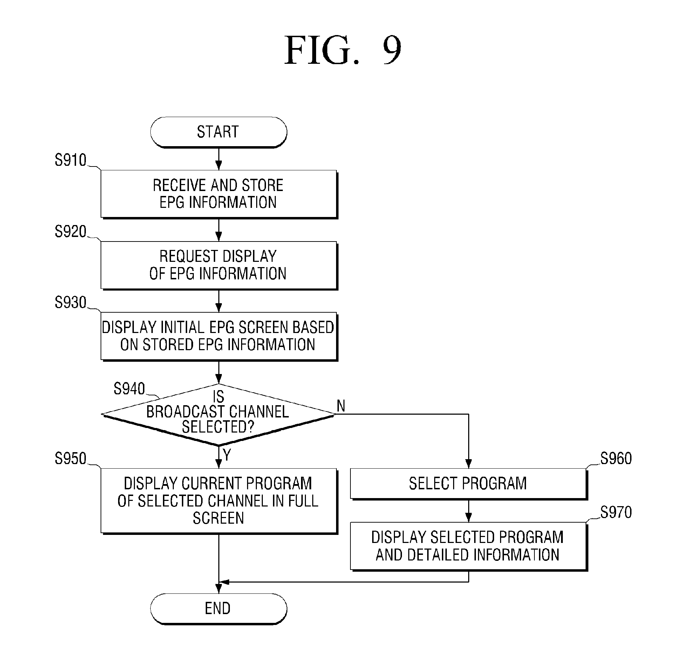

FIG. 9 is a flow chart illustrating a method for controlling the display apparatus 100 according to an exemplary embodiment of the present invention.

Referring to FIG. 9, the first control unit 150 controls the first communication unit 110 to receive EPG information from an external device, and controls the storage unit 140 to store the EPG information (S910). The external device may be the EPG server 20 which is connected through the network 10, or the broadcast display apparatus 200.

If the user requests display of the EPG information (S920), the first control unit 150 generates and displays an initial EPG screen 300 as illustrated in FIG. 3 based on the EPG information stored in the storage unit 140 (S930).

If the user selects a broadcast channel, for example, BBC 300a on the initial EPG screen 300 (S940), the first control unit 150 generates and displays a program being currently broadcast in the selected channel in full screen (S950). Accordingly, a full screen 400 reproduces the current program.

If the user selects a program in the initial EPG screen 300, for example, LOST 300b (S960), the first control unit 150 extracts detailed information of the program from the stored EPG information, and generates and displays an EPG detailed information screen 500b together with a screen for reproducing the program (S970). Accordingly, in the EPG detailed information screen 500b, a first area 501 displays or reproduces a preview image of the program, and a second area 502 displays the detailed information of the program. In operation S970, the first control unit 150 may display an EPG detailed information screen 500a showing only the EPG detailed information. The type of an EPG detailed information screen can vary according to the design of a manufacturer or by the user's settings.

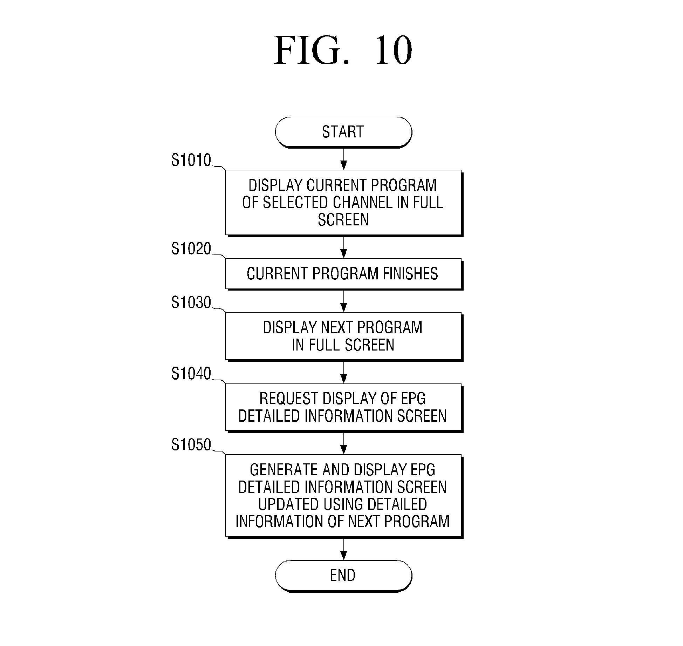

FIG. 10 is a flow chart illustrating a method for controlling the display apparatus 100 according to another exemplary embodiment of the present invention.

Referring to FIG. 10, if the user requests display of a current program in full screen, the first control unit 150 generates and displays the current program in a full screen 600a (S1010). The full screen 600a may be displayed in the same process as the full screen 400 described in operation S950.

If reproduction of the current program is complete (S1020), the first control unit 150 generates a next program received through the first communication unit 110 in a full screen 600b and displays the next program on the display panel 130 (S1030). Accordingly, the next program can be reproduced in the full screen 600b.

If the user requests display of an EPG detailed information screen while the next program is being reproduced in the full screen 600b, the first control unit 150 generates and displays an EPG detailed information screen 700 which is updated using detailed information of the next program (S1050). That is, the first control unit 150 extracts the detailed information of the next program from the EPG information stored in the storage unit 140, and generates the EPG detailed information screen 700 in which the second area 702 displays the extracted detailed information.

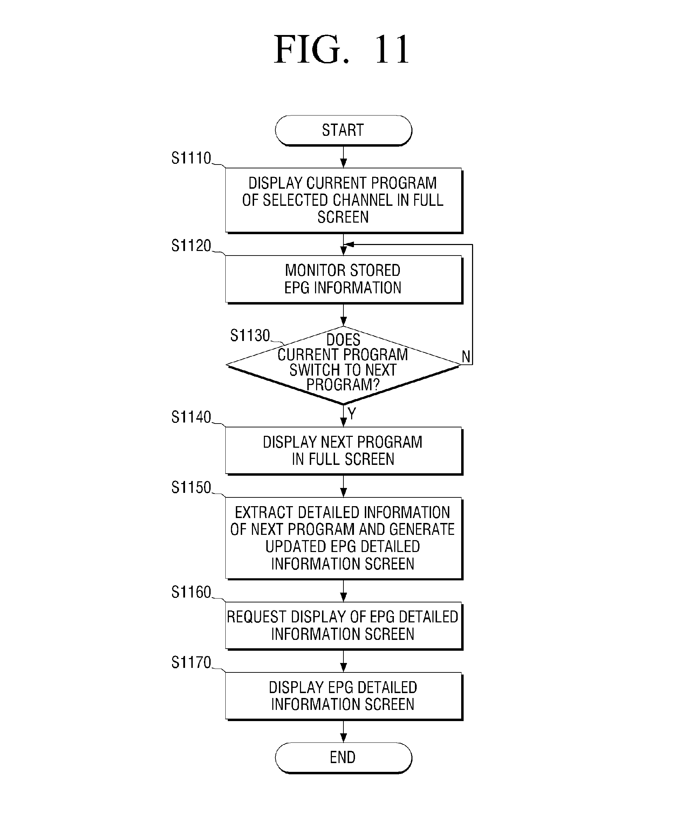

FIG. 11 is a flow chart illustrating a method for controlling the display apparatus 100 according to yet another exemplary embodiment of the present invention.

Referring to FIG. 11, if the user requests display of a current program in full screen, the first control unit 150 generates and displays the current program in a full screen 600a (S1110). The full screen 600a may be displayed in the same process as the full screen 400 described in operation S950.

While the current program is being reproduced in a full screen 600a, the first control unit 150 determines whether or not the current program finishes and switches to the next program (S1130) by monitoring stored EPG information (S1120).

If the current program switches to the next program, the first control unit 150 receives the next program and displays the next program in a full screen 600b (S1140).

In addition, the first control unit 150 extracts detailed information of the next program from the stored EPG information, and temporarily generates and temporarily stores an updated EPG detailed information screen (S1150).

If the user requests display of the EPG detailed information screen using the button 601 (S1160), the first control unit 150 displays the temporarily stored EPG detailed information screen on the display panel 130 as illustrated in FIG. 7 (S1170).

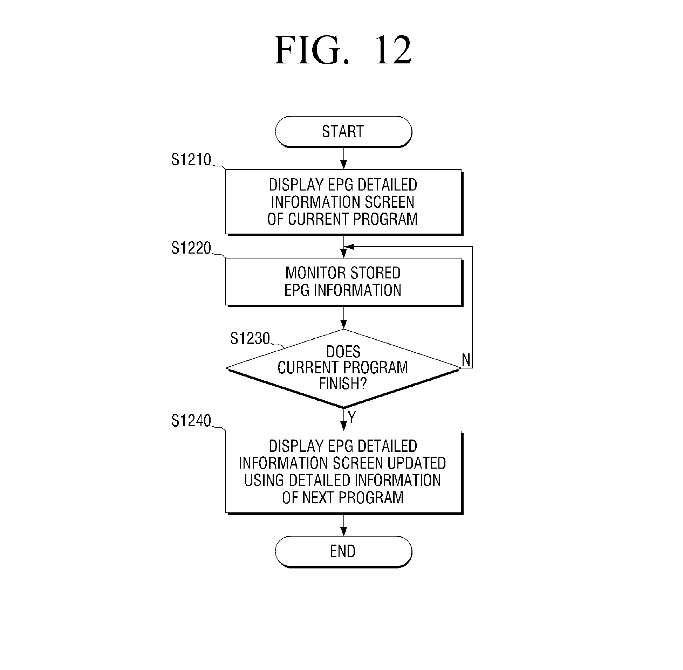

FIG. 12 is a flow chart illustrating a method for controlling the display apparatus 100 according to yet another exemplary embodiment of the present invention.

Referring to FIG. 12, the first control unit 150 generates an EPG detailed information screen (for example, 500b) of a current program and displays the EPG detailed information screen on the display panel 130 (S1210). The EPG detailed information screen may be displayed in the same process as the EPG detailed information screen 500b described in operation S970.

While the current program is being reproduced on the first area 501 of the EPG detailed information screen 500b, the first control unit 150 monitors stored EPG information (S1220).

As the result of monitoring, if it is determined that the current program finishes (S1230), the first control unit 150 generates and displays an updated EPG detailed information screen 700 using detailed information of a next program (S1240). For example, if the current program finishes while the EPG detailed information screen 500b is being displayed on the display panel 130, the first control unit 150 extracts detailed information of a next program from the EPG information stored in the storage unit 140, and generates an EPG detailed information screen 700 as illustrated in FIG. 7.

As can be appreciated from the above description, when a current program viewed in full screen and finishes and a next program starts, if the user requests display of an EPG detailed information screen of the next program, the display apparatus 100 displays an updated EPG detailed information screen showing detailed information of the next program.

Furthermore, if a current program finishes while an EPG detailed information screen showing the current program and detailed information of the current program is being displayed, the display apparatus 100 updates and displays a next program and detailed information of the next program on the EPG detailed information screen. Therefore, the user can rapidly and precisely check detailed information of the next program being reproduced.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

**1.** A display apparatus providing broadcast program information, the display apparatus comprising:
a communication unit which receives electronic program guide (EPG) information;
a display panel which displays a current program being broadcast in full screen; and
a control unit which, if display of an EPG detailed information screen is requested while the current program finishes and a next program is being displayed in full screen, controls the display panel to display an updated EPG detailed information screen showing detailed information of the next program based on the received EPG information.

**2.** The display apparatus according to claim 1, further comprising:
a storage unit which stores the received EPG information,
wherein the control unit extracts the detailed information of the next program from the stored EPG information and controls the display panel to display the detailed information of the next program together with the next program on the updated EPG detailed information screen.

**3.** The display apparatus according to claim 1 or 2, further comprising:
a storage unit which stores the received EPG information,
wherein if the current program finishes, the control unit extracts the detailed information of the next program from the stored EPG information and temporarily generates the updated EPG detailed information screen, and if the display of the EPG detailed information screen is requested, the control unit controls the display panel to display the temporarily generated updated EPG detailed information screen.

**4.** The display apparatus according to claim 3, wherein if the control unit determines that a program being reproduced switches from the current program to the next program by monitoring the stored EPG information, the control unit temporarily generates the updated EPG detailed information screen.

**5.** The display apparatus according to any one of claims 1 to 4, wherein if the current program finishes while the EPG detailed information screen showing the current program and the detailed information of the current program is being displayed on the display panel, the control unit controls the display panel to display the updated EPG detailed information screen showing the next program and the detailed information of the next program.

**6.** The display apparatus according to claim 5, further comprising:
a storage unit which stores the received EPG information,
wherein if the control unit determines that the current program finishes by monitoring the stored EPG information, the control unit extracts the detailed information of the next program from the stored EPG information, and controls the display panel to display the updated EPG detailed information screen showing the detailed information of the next program together with the next program.

**7.** The display apparatus according to claim 1, wherein the display panel displays an initial EPG screen including a list of programs according to a plurality of broadcast channels based on the received EPG information, and
if one of the plurality of broadcast channels is selected on the initial EPG screen, the control unit controls the display panel to display a program being currently broadcast through the selected one of the plurality of broadcast channels on the initial EPG screen in full screen.

**8.** The display apparatus according to claim 1, wherein the display panel displays an initial EPG screen including a list of programs according to a plurality of broadcast channels based on the received EPG information, and
if one program of the list of programs is selected on the initial EPG screen, the control unit controls the display panel to display an EPG detailed information screen showing the selected one program of the list of programs and detailed information of the selected one program.

**10.** A method for providing broadcast program information in a display apparatus, the method comprising:
receiving electronic program guide (EPG) information;
displaying a current program being broadcast in full screen; and
if display of an EPG detailed information screen is requested while the current program finishes and a next program is being displayed in full screen, displaying an updated EPG detailed information screen showing detailed information of the next program based on the received EPG information.

**10.** The method according to claim 9, further comprising:
storing the received EPG information,
wherein the displaying of the updated EPG detailed information screen comprises extracting the detailed information of the next program from the stored EPG information, and generating and displaying the updated EPG detailed information screen showing the detailed information of the next program together with the next program.

**11.** The method according to claim 9 or 10, further comprising:
storing the received EPG information; and
if the current program finishes, extracting the detailed information of the next program from the stored EPG information and temporarily generating the updated EPG detailed information screen,
wherein the displaying of the updated EPG detailed information screen comprises displaying the temporarily generated updated EPG detailed information screen if display of the EPG detailed information screen is requested.

**12.** The method according to claim 11, further comprising:
determining whether a program being reproduced switches from the current program to the next program by monitoring the stored EPG information,
wherein if the program being reproduced switches from the current program to the next program, the updated EPG detailed information screen is temporarily generated.

**13.** The method according to any one of claims 9 to 13, further comprising:
displaying the EPG detailed information screen showing the current program and the detailed information of the current program; and
if the current program finishes, displaying the updated EPG detailed information screen showing the next program and the detailed information of the next program.

**14.** The method according to claim 9, further comprising:
displaying an initial EPG screen including a list of programs according to a plurality of broadcast channels based on the received EPG information;
selecting one of the plurality of broadcast channels on the initial EPG screen; and
displaying a program being currently broadcast through the selected one of the plurality of broadcast channels on the initial EPG screen in full screen.

**15.** The method according to claim 9, further comprising:
displaying an initial EPG screen including a list of programs according to a plurality of broadcast channels based on the received EPG information;
selecting one program of the list of programs on the initial EPG screen; and
displaying the updated EPG detailed information screen showing the selected one program of the list of programs and detailed information of the selected one program.
